# EUROPEAN PATENT SPECIFICATION

(11) **EP 3 533 973 B1**
(45) Date of publication and mention of the grant of the patent: **11.08.2021**
(21) Application number: 18215629.9
(22) Date of filing: 21.12.2018
(51) Int. Cl.: F01D 17/16, F04D 29/56, F02C 9/20

(54) **SELF-RETAINING VANE ARM ASSEMBLY FOR GAS TURBINE ENGINE**
SELBSTHALTENDE SCHAUFELARMANORDNUNG FÜR GASTURBINENMOTOR
ENSEMBLE DE BRAS D'AUBE À RETENUE AUTOMATIQUE POUR MOTEUR DE TURBINE À GAZ

(30) Priority: 28.02.2018 US 201815908268
(43) Date of publication of application: 04.09.2019
(73) Proprietor: Raytheon Technologies Corporation, Farmington, CT 06032 (US)
(72) Inventor: KJELBY, Diane C., Middletown, CT Connecticut 06457 (US); PRATT, William S., West Hartford, CT Connecticut 06119 (US); HART, Adam, East Hampton, CT Connecticut 06424 (US); ROBERTS, Steven D., Moodus, CT Connecticut 06469 (US)
(74) Representative: Dehns

(56) References cited:
- EP-A1- 1 331 403
- EP-A2- 2 299 064
- WO-A1-2014/158455
- FR-A1- 2 897 120
- GB-A- 2 402 181
- US-A- 6 019 574
- US-A1- 2006 257 228

## Description

### BACKGROUND

Exemplary embodiments pertain to the art of gas turbine engines and, more particularly, to a self-retaining vane arm assembly for gas turbine engines.

Some turbine engine includes a plurality of engine sections such as, for example, a fan section, a compressor section, a combustor section and a turbine section. The turbine engine may also include a variable area vane arrangement. Such a vane arrangement may be configured to guide and/or adjust the flow of gas into a respective one of the engine sections. Alternatively, the vane arrangement may be configured to guide and/or adjust the flow of gas between adjacent stages of a respective one of the engine sections.

Some variable area vane arrangements include a plurality of adjustable stator vanes that are rotatably connected to an inner vane platform and an outer vane platform. Each of the stator vanes includes an airfoil that extends between the inner and the outer vane platforms. Each of the stator vanes may be rotated about a respective axis using a vane arm. A vane arm may be a sheet metal or machined piece that transmits load from a synchronizing ring to a variable vane stem. The end of the vane arm that interfaces with the synchronizing ring has a pin swaged into a hole on the end, and sits in a pinhole on the ring. The end that attaches to the vane stem typically features claws that grab onto flats machined on the vane stem, in order to seamlessly and without hysteresis, transmit the load. In recent years, the increasing torque that occurs in the vane stems has resulted in titanium claw designs having difficulty in meeting stress requirements. Additionally, single engine aircrafts have created the need for redundancy in designs to ensure the safety of the engine, the aircraft and the pilot.

GB 2402181 A discloses a variable vane arrangement for a compressor of a gas turbine engine comprising a plurality of circumferentially arranged vanes, a plurality of operating levers and a control ring.

WO 2014/158455 A1 discloses a variable vane actuation system comprising a vane arm with a vane stem contact surface and a radially outward facing surface. The vane stem contact surface is to contact a vane stem of a variable vane and thereby actuate the variable vane about a radially extending axis. The vane stem contact surface is angled relative to both the radially extending axis and the radially outward facing surface.

US 2006/257228 A1 discloses a locking ring for axially fixing a shaft part in a ring part.

FR 2897120 A1 discloses a compressor blade pivot designed to receive one end of an angle adjustment lever that has its other end connected to a control ring which has one or more angled flat surfaces that converge in the direction of the pivot's free end.

EP 2299064 A2 discloses a variable stator vane assembly for a gas turbine engine having a projection protruding from the upper stem of the vane which engages an aperture in a vane lever to provide a visual indication of correct alignment between the lever and the vane.

### BRIEF DESCRIPTION

Disclosed is a vane arm assembly for a gas turbine engine including a vane arm defining an aperture at an end thereof with an aperture wall. Also included is a vane stem extending through the aperture of the vane arm. Further included is an angled face disposed on an exterior of the vane stem. Yet further included is a wedge face disposed on the aperture wall, the wedge face and the angled face having a corresponding geometry, the wedge face and the angled face in contact with each other in a preloaded condition to transmit torque from the vane arm to the vane stem. Also included is an anti-rotation wall disposed on the exterior of the vane stem, the anti-rotation wall angularly offset from the angled face of the vane stem. Further included is an anti-rotation surface disposed on the aperture wall and angularly offset from the wedge face of the vane arm, the anti-rotation wall and the anti-rotation surface having a corresponding geometry, the anti-rotation wall and the anti-rotation surface in contact with each other to maintain torque transmission from the vane arm to the vane stem during a surge condition. The vane arm assembly includes a mechanical fastener retaining a position of the vane arm in the longitudinal direction of the vane stem. An impedance ring is disposed within the aperture of the vane arm and within an impedance ring groove defined by the vane stem to provide redundant position retention of the vane arm in the longitudinal direction of the vane stem. The anti-rotation wall is disposed radially outwardly of the angled face, and the impedance ring groove is disposed radially outwardly of the anti-rotation wall. The anti-rotation surface is disposed radially outwardly of the wedge face, and the impedance ring is positioned radially outwardly of the anti-rotation surface.

In addition to one or more of the features described above, or as an alternative, further embodiments may include that the aperture wall of the vane arm includes an impedance ring surface extending at least partially around the aperture wall, wherein the impedance ring may be disposed on the impedance ring surface.

In addition to one or more of the features described above, or as an alternative, further embodiments may include that the vane arm is operatively coupled to an actuator ring with a pin proximate to a first end of the vane arm, wherein the vane arm may be operatively coupled to the vane stem proximate a second end of the vane arm to actuate movement of at least one adjustable guide vane in the gas turbine engine.

Further disclosed is a gas turbine engine including a compressor section, a combustor section, a turbine section, and a vane arm assembly according to any of the embodiments described above. The vane arm assembly is operatively coupled to an actuator ring and to at least one adjustable guide vane in the compressor section.

### BRIEF DESCRIPTION OF THE DRAWINGS

The following descriptions should not be considered limiting in any way. With reference to the accompanying drawings, like elements are numbered alike:
FIG. 1 is a partial cross-sectional view of a gas turbine engine;
FIG. 2 is a perspective view of a plurality of variable vane stages of the gas turbine engine;
FIG. 3 is a perspective view of a vane arm assembly in an assembled condition;
FIG. 4 is a perspective view of the vane arm assembly in a disassembled condition;
FIG. 5 is a perspective view of a vane arm of the vane arm assembly;
FIG. 6 is an end plan view of a portion of the vane arm viewed radially outwardly;
FIG. 7 is an elevational, cross-sectional view of a portion of the vane arm;
FIG. 8 is a perspective view of a vane stem of the vane arm assembly;
FIG. 9 is an elevational view of the vane arm assembly in the assembled condition;
FIG. 10 is a perspective view of a portion of the vane arm assembly; and
FIG. 11 is an elevational view of a portion of the vane arm assembly.

### DETAILED DESCRIPTION

A detailed description of one or more embodiments of the disclosed apparatus and method are presented herein by way of exemplification and not limitation with reference to the Figures.

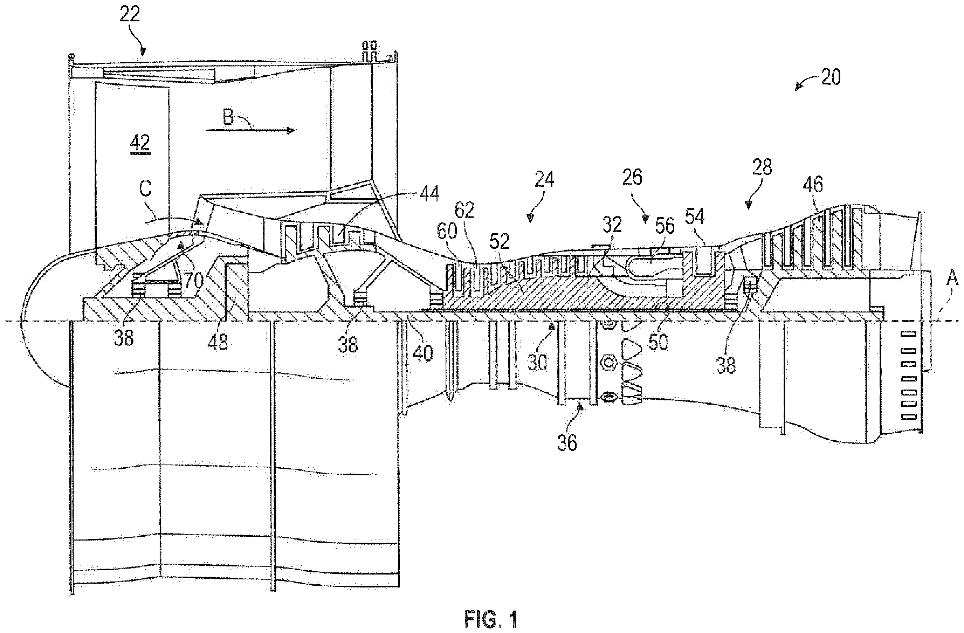

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, and turbine section 28 may be varied.

With continued reference to FIG. 1, the engine 20 also includes one or more variable area vane arrangements; e.g., vane arrangements 60, 62, etc. The vane arrangements directs gas for a respective engine section. In the illustrated example, the vane arrangement 60 guides and/or adjusts the flow of the core air into the compressor section 24. The vane arrangement 62 guides and/or adjusts the flow of the core air through the HPC section 24; e.g., between adjacent HPC rotor stages.

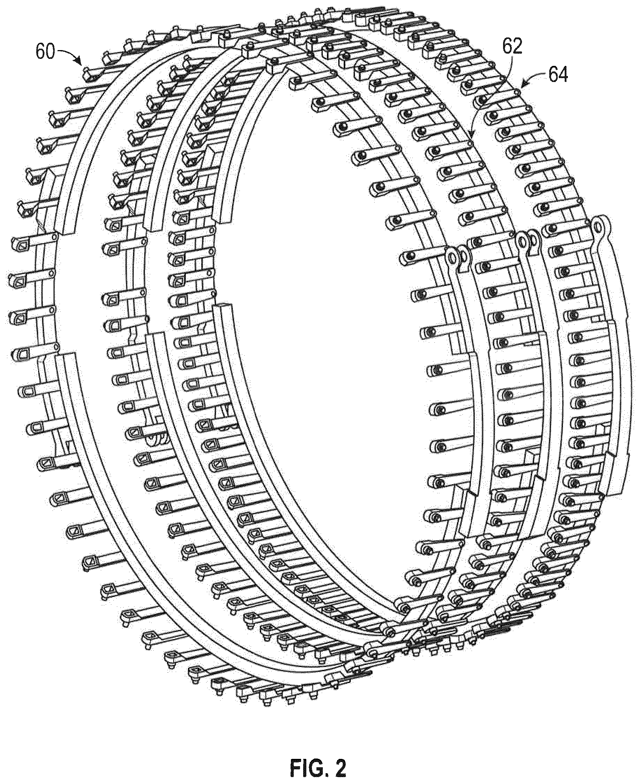

Referring now to FIG. 2, three vane arrangements 60, 62, 64 are illustrated. The number of arrangements may vary depending upon the particular application. Regardless of the number of vane arrangements, each arrangement includes one or more adjustable stator vanes that are arranged circumferentially around the central axis. Each of the stator vanes may be rotated about its respective axis by pivoting a respective vane arm assembly 100 with an actuator (not shown).

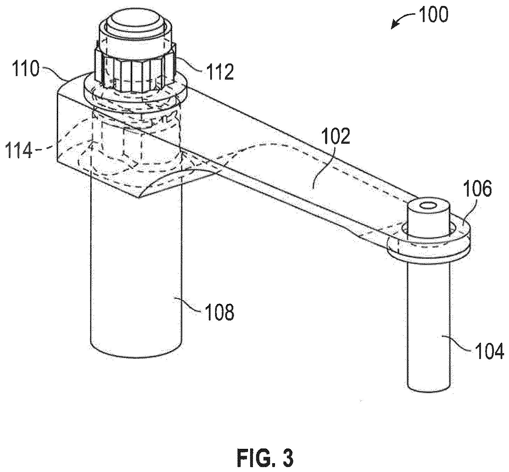

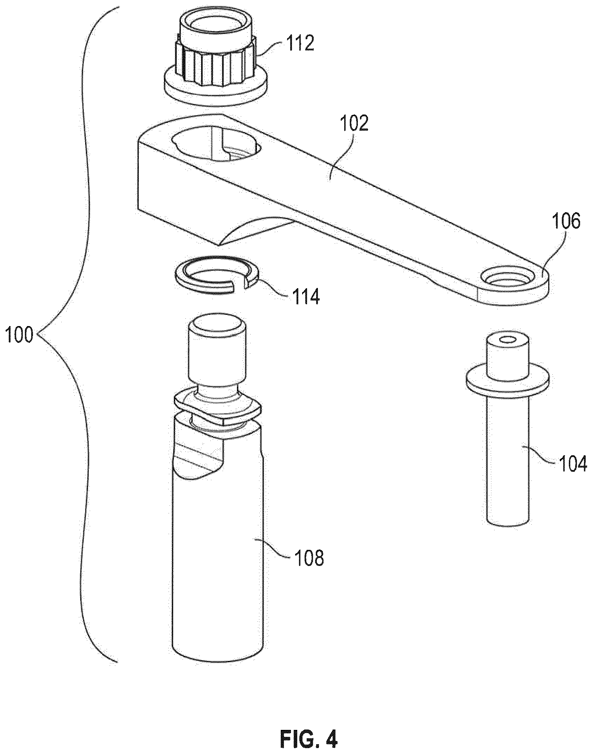

Referring to FIGS. 3 and 4, the vane arm assembly 100 is illustrated in greater detail, with FIG. 3 depicting an assembled condition of the vane arm assembly 100 and FIG. 4 showing the assembly in a disassembled condition. The vane arm assembly includes a vane arm 102. The vane arm 102 is operatively coupled to the actuator with a pin 104 proximate a first end 106 of the vane arm 102. The vane arm 102 is coupled to a vane stem 108 proximate a second end 110 of the vane arm 102. Coupling of the vane arm 102 to the vane stem 108 is made with corresponding geometry of the vane stem 108 and interior portions of the vane arm 102, as well as a lock nut 112 and an impedance ring 114, as described in detail herein. As will be appreciated from the description herein, the three forms of retention provided by the preload, the lock nut 112 and the impedance ring 114 ensure layers of retention redundancy and can withstand significant surge loading that may occur. Additionally, the vane arm assembly 100 disclosed herein allows for a more reliable and efficient assembly process.

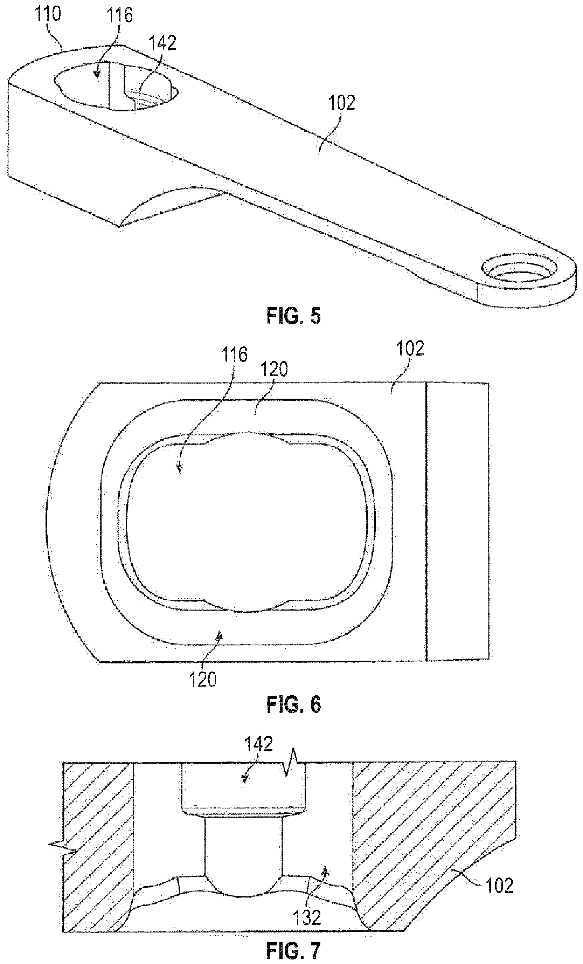

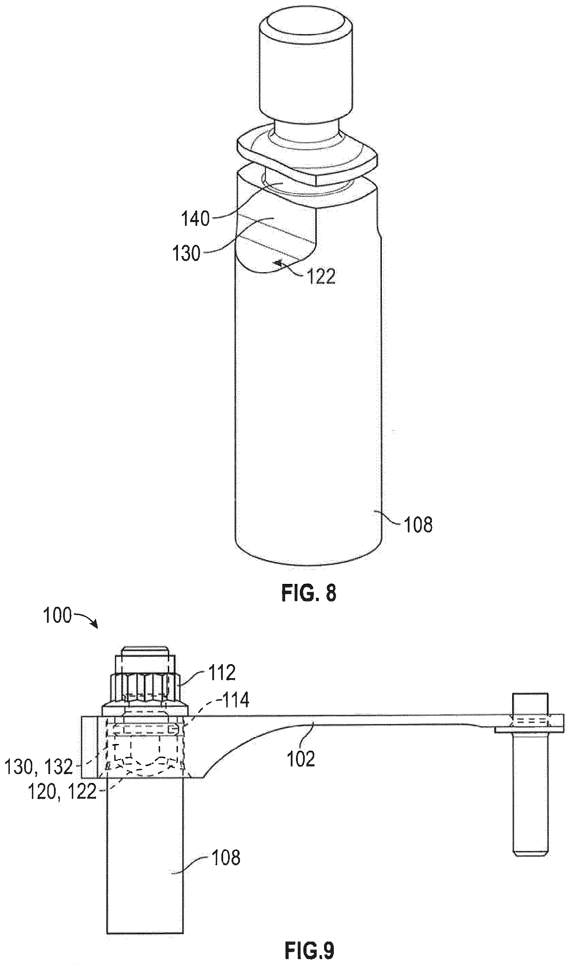

Referring now to FIGS. 5-8, the vane arm 102 and the vane stem 108 are illustrated in greater detail, with FIGS. 6 and 7 showing the second end 110 portion of the vane arm 102 which couples to the vane stem 108. The vane arm 102 defines an aperture 116 proximate the second end 110 that receives the vane stem 108 therethrough. At a radially inner portion of the wall that defines the aperture 116 (aperture wall) is an angled face, which may also be referred to as a wedge face 120. The wedge face 120 extends around at least a portion of the aperture wall and is shown well in FIG. 6, which is a plan view of the radially inner portion of the vane arm 102. In the illustrated embodiment, a pair of wedge faces 120 are disposed on opposing sides of the aperture 116. The geometry of the wedge face(s) 120 substantially corresponds to an angled face 122 of the vane stem (FIG. 8). As with the wedge face 120, the angled face 122 of the vane stem 108 in the illustrated embodiment is actually a pair of faces 122 on opposing sides of the vane stem 108. The surfaces of the faces 120, 122 are in contact in a preloaded condition upon assembly, with the substantially corresponding geometry transmitting torque from the vane arm 102 to the vane stem 108 under normal operation of the vane arm assembly 100 and the compressor section 24.

The angled face 122 of the vane stem 108 transitions into a substantially planar anti-rotation wall 130 radially outwardly of the angled face 122. In the illustrated embodiment, a pair of anti-rotation walls 130 is present and the walls engage corresponding anti-rotation surfaces 132 of the aperture wall of the vane arm 102. Collectively, the anti-rotation walls 130 and the anti-rotation surfaces 132 may be referred to as an anti-rotation slot. The anti-rotation slot prevents the vane arm 102 from translating along the vane stem 108 during a surge event. Consequently, the anti-rotation slot resolves a surge torque after the preload on the wedge faces 120, 122 is lost.

The vane stem 108 includes an impedance ring groove 140 radially outwardly of the anti-rotation walls 130. At a common location along the longitudinal direction of the vane stem 108, the vane arm 102 includes an impedance ring surface 142 for positioning the impedance ring 114. The geometry and dimensions of the groove 140 and surface 142 allows for expansion and compression of the impedance ring 114 during assembly and disassembly. The impedance ring 114 provides retention redundancy, by avoiding movement of the vane arm 102 relative to the longitudinal direction of the vane stem 108 in the event the lock nut 112 is damaged or disengaged.

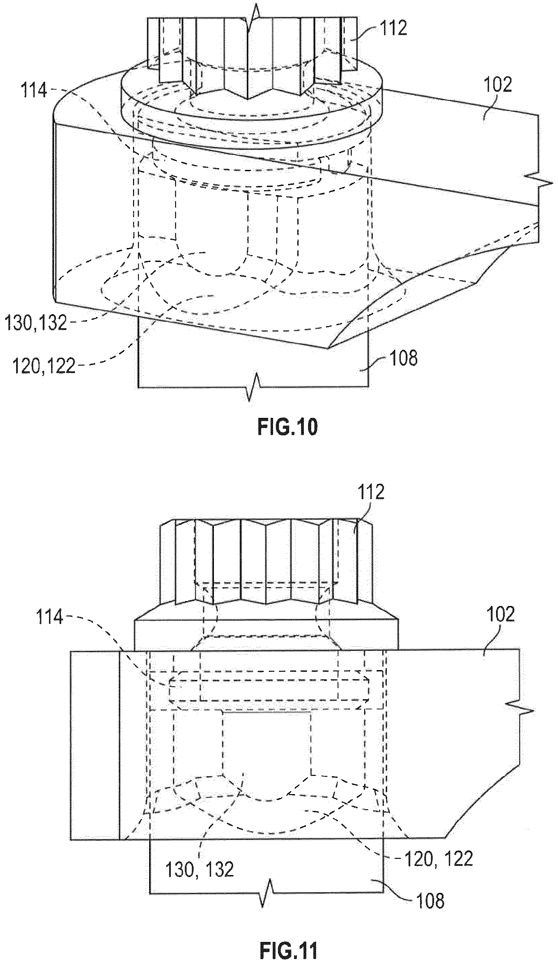

FIGS. 9-11 show various views of the vane arm assembly 100 in the assembled condition. As shown, the vane arm 102 is able to transmit torque to the vane stem 108 via the preloaded wedge faces 120, 122, with a secondary torque transmission feature provided with the anti-rotation slot, which is comprised of the anti-rotation walls 130 and the anti-rotation surfaces 132. Additionally, redundant retention features are provided in the form of the lock nut 112 and the impedance ring 114. The impedance ring 114 allows radial assembly and a single vane arm can be assembled and disassembled at a time, in contrast to axially assembled assemblies.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A vane arm assembly (100) for a gas turbine engine (20) comprising:
a vane arm (102) defining an aperture (116) at an end thereof with an aperture wall;
a vane stem (108) extending through the aperture of the vane arm;
an angled face (122) disposed on an exterior of the vane stem;
a wedge face (120) disposed on the aperture wall, the wedge face and the angled face having a corresponding geometry, the wedge face (120) and the angled face (122) in contact with each other in a preloaded condition to transmit torque from the vane arm to the vane stem;
an anti-rotation wall (130) disposed on the exterior of the vane stem, the anti-rotation wall angularly offset from the angled face (122) of the vane stem;
an anti-rotation surface (132) disposed on the aperture wall and angularly offset from the wedge face (120) of the vane arm, the anti-rotation wall a (130) and the anti-rotation surface (132) having a corresponding geometry, the anti-rotation wall and the anti-rotation surface in contact with each other to maintain torque transmission from the vane arm to the vane stem during a surge condition; and
a mechanical fastener (112) retaining a position of the vane arm in the longitudinal direction of the vane stem;
**characterised in that**:
the vane arm assembly further comprises an impedance ring (114) disposed within the aperture of the vane arm and within an impedance ring groove (140) defined by the vane stem to provide redundant position retention of the vane arm in the longitudinal direction of the vane stem; and **in that**
the anti-rotation wall (130) is disposed radially outwardly of the angled face (122), and the impedance ring groove (140) is disposed radially outwardly of the anti-rotation wall, and **in that** the anti-rotation surface (132) is disposed radially outwardly of the wedge face (120), and the impedance ring (114) is positioned radially outwardly of the anti-rotation surface (132).

2. The vane arm assembly of claim 1, wherein the aperture wall of the vane arm includes an impedance ring surface (142) extending at least partially around the aperture wall, the impedance ring disposed on the impedance ring surface.

3. The vane arm assembly of claim 1 or 2, wherein the vane arm (102) is operatively coupled to an actuator ring with a pin (104) proximate to a first end (106) of the vane arm, the vane arm operatively coupled to the vane stem (108) proximate a second end (110) of the vane arm to actuate movement of at least one adjustable guide vane in the gas turbine engine.

4. A gas turbine engine (20) comprising:
a compressor section (24);
a combustor section (26);
a turbine section (28); and
a vane arm assembly (100) according to any preceding claim operatively coupled to an actuator ring and to at least one adjustable guide vane in the compressor section.

## Patentansprüche

1. Schaufelarmanordnung (100) für ein Gasturbinentriebwerk (20), umfassend:
einen Schaufelarm (102), welcher eine Öffnung (116) mit einer Öffnungswand an einem Ende davon definiert;
einen Schaufelstamm (108), welcher sich durch die Öffnung des Schaufelarms erstreckt;
eine abgewinkelte Seite (122), welche an einer Außenseite des Schaufelstamms angeordnet ist;
eine Keilseite (120), welche an der Öffnungswand angeordnet ist, wobei die Keilseite und die abgewinkelte Seite eine entsprechende Geometrie aufweisen, sich die Keilseite (120) und die abgewinkelte Seite (122) in einem vorgeladenen Zustand berühren, um ein Drehmoment von dem Schaufelarm zu dem Schaufelstamm zu übertragen;
eine Anti-Rotationswand (130), welche an der Außenseite des Schaufelstamms angeordnet ist, wobei die Anti-Rotationswand abgewinkelt versetzt von der abgewinkelten Seite (122) des Schaufelstamms ist;
eine Anti-Rotationsfläche (132), welche an der Öffnungswand und abgewinkelt versetzt von der Keilseite (120) des Schaufelarms angeordnet ist, wobei die Anti-Rotationswand (130) und die Antirotationsfläche (132) eine entsprechende Geometrie aufweisen, sich die Anti-Rotationswand und die Anti-Rotationsfläche berühren, um eine Drehmomentübertragung von dem Schaufelarm zu dem Schaufelstamm während eines Anstiegszustands zu erhalten; und
ein mechanisches Befestigungsmittel (112), welches eine Position des Schaufelarms in der Längsrichtung des Schaufelstamms hält;
**dadurch gekennzeichnet, dass**:
die Schaufelarmanordnung ferner einen Impedanzring (114) umfasst, welcher in der Öffnung des Schaufelarms und in einer Impedanzringnut (140) angeordnet ist, welche durch den Schaufelstamm definiert ist, um redundantes Halten der Position des Schaufelarms in der Längsrichtung des Schaufelstamms bereitzustellen; und dadurch, dass
die Anti-Rotationswand (130) radial nach außen von der abgewinkelten Seite (122) angeordnet ist, und die Impedanzringnut (140) radial nach außen von der Anti-Rotationswand angeordnet ist, und dadurch, dass
die Anti-Rotationsfläche (132) radial nach außen von der Keilseite (120) angeordnet ist, und der Impedanzring (114) radial nach außen von der Anti-Rotationsfläche (132) positioniert ist.

2. Schaufelarmanordnung nach Anspruch 1, wobei die Öffnungswand des Schaufelarms eine Impedanzringfläche (142) beinhaltet, welche sich mindestens teilweise um die Öffnungswand erstreckt, wobei der Impedanzring auf der Impedanzringfläche angeordnet ist.

3. Schaufelarmanordnung nach Anspruch 1 oder 2, wobei der Schaufelarm (102) mit einem Stift (104) nahe einem ersten Ende (106) des Schaufelarms an einen Aktorring wirkgekoppelt ist, wobei der Schaufelarm nahe einem zweiten Ende (110) des Schaufelarms an den Schaufelstamm (108) wirkgekoppelt ist, um ein Bewegen von mindestens einer einstellbaren Leitschaufel in dem Gasturbinentriebwerk zu aktuieren.

4. Gasturbinentriebwerk (20), umfassend:
einen Verdichterabschnitt (24);
einen Brennkammerabschnitt (26);
einen Turbinenabschnitt (28); und
eine Schaufelarmanordnung (100) gemäß einem der vorstehenden Ansprüche, welche an einen Aktorring und an mindestens eine einstellbare Leitschaufel in dem Verdichterabschnitt wirkgekoppelt ist.

## Revendications

1. Ensemble de bras d'aube (100) pour moteur de turbine à gaz (20) comprenant :
un bras d'aube (102) définissant une ouverture (116) au niveau d'une extrémité de celui-ci avec une paroi d'ouverture ;
une tige d'aube (108) s'étendant à travers l'ouverture du bras d'aube ;
une face inclinée (122) disposée sur un extérieur de la tige d'aube ;
une face de coin (120) disposée sur la paroi d'ouverture, la face de coin et la face inclinée ayant une géométrie correspondante, la face de coin (120) et la face inclinée (122) étant en contact l'une avec l'autre dans un état préchargé pour transmettre un couple du bras d'aube à la tige d'aube ;
une paroi anti-rotation (130) disposée sur l'extérieur de la tige d'aube, la paroi anti-rotation étant décalée angulairement par rapport à la face inclinée (122) de la tige d'aube ;
une surface anti-rotation (132) disposée sur la paroi d'ouverture et décalée angulairement par rapport à la face de coin (120) du bras d'aube, la paroi anti-rotation (130) et la surface anti-rotation (132) ayant une géométrie correspondante, la paroi anti-rotation et la surface anti-rotation étant en contact l'une avec l'autre pour maintenir la transmission de couple du bras d'aube à la tige d'aube pendant une condition de surpression ; et
une attache mécanique (112) retenant une position du bras d'aube dans la direction longitudinale de la tige d'aube ;
**caractérisé en ce que** :
l'ensemble de bras d'aube comprend en outre une bague d'impédance (114) disposée à l'intérieur de l'ouverture du bras d'aube et à l'intérieur d'une rainure annulaire d'impédance (140) définie par la tige d'aube pour assurer une rétention de position redondante du bras d'aube dans la direction longitudinale de la tige d'aube ; et **en ce que**
la paroi anti-rotation (130) est disposée radialement vers l'extérieur de la face inclinée (122), et la rainure annulaire d'impédance (140) est disposée radialement vers l'extérieur de la paroi anti-rotation, et **en ce que**
la surface anti-rotation (132) est disposée radialement vers l'extérieur de la face de coin (120), et la bague d'impédance (114) est positionnée radialement vers l'extérieur de la surface anti-rotation (132).

2. Ensemble de bras d'aube selon la revendication 1, dans lequel la paroi d'ouverture du bras d'aube comporte une surface annulaire d'impédance (142) s'étendant au moins partiellement autour de la paroi d'ouverture, la bague d'impédance étant disposée sur la surface annulaire d'impédance.

3. Ensemble de bras d'aube selon la revendication 1 ou 2, dans lequel le bras d'aube (102) est couplé fonctionnellement à une bague d'actionnement avec une broche (104) à proximité d'une première extrémité (106) du bras d'aube, le bras d'aube étant couplé fonctionnellement à la tige d'aube (108) à proximité d'une seconde extrémité (110) du bras d'aube pour actionner le mouvement d'au moins une aube de guidage réglable dans le moteur de turbine à gaz.

4. Moteur de turbine à gaz (20) comprenant :
une section de compresseur (24) ;
une section de chambre de combustion (26) ;
une section de turbine (28) ; et
un ensemble de bras d'aube (100) selon une quelconque revendication précédente couplé fonctionnellement à une bague d'actionnement et à au moins une aube de guidage réglable dans la section de compresseur.
